# EUROPÄISCHE PATENTANMELDUNG

(11) **EP 2 998 804 A1**
(43) Veröffentlichungstag der Anmeldung: **23.03.2016**
(21) Anmeldenummer: 14185325.9
(22) Anmeldetag: 18.09.2014
(51) Int. Cl.: G05B 19/042, G05B 19/05, G05B 19/418

(54) **Peripheriebaugruppe für eine industrielle Prozessautomatisierung zur Identifikation und Auslesen von Konfigurationsdaten der Peripheriebaugruppe**

(71) Anmelder: Siemens Aktiengesellschaft, 80333 München (DE)
(72) Erfinder: Jacob, Udo, 90542 Eckental (DE)

(57) **Zusammenfassung**

Die Erfindung betrifft eine Peripheriebaugruppe (1,73) für die industrielle Prozessautomatisierung mit Eingangsklemmen (2) und/oder Ausgangsklemmen (3) zum Anschluss von elektrischen Leitungen zu Sensoren und/oder Aktoren eines zu automatisierenden industriellen Prozesses, wobei zur Identifikation und Auslesen von Konfigurationsdaten der Peripheriebaugruppe, ein Benutzer (50) eine Berührfläche (11,73a) der Peripheriebaugruppe (73) berührt, welche über den Körper des Benutzers ein Signal an ein mobiles Endgerät (51) sendet, das der Benutzer in der anderen Hand hält. Auf der Anzeigeeinheit (52) des mobilen Endgeräts werden alle Informationen bezüglich der Ein- und Ausgänge der Peripheriebaugruppe angezeigt. Die Berührungsfläche kann als elektrisch leitender Teil innerhalb eines Lüftungsgitters (46) einer Seitenfläche (42) der Peripheriebaugruppe integriert sein.

## Beschreibung

Die Erfindung betrifft eine Peripheriebaugruppe für die industrielle Prozessautomatisierung mit Eingangs- und/oder Ausgangsklemmen zum Anschluss von elektrischen Leitungen zu Sensoren und/oder Aktoren eines zu automatisierenden industriellen Prozesses. Aufweisend ein Gehäuse zur Aufnahme einer Steuereinheit von Eingangs- und/oder Ausgangsschaltungen, welche zum einen mit den Eingangs- und/oder Ausgangsklemmen und zum anderen mit der Steuereinheit verbunden sind, von einem Speicherbaustein, in welchem Konfigurationsdaten der Beschaltung der Eingangs- und/oder Ausgangsklemmen hinterlegt sind.

Peripheriebaugruppen, insbesondere I/O-Baugruppen der Automatisierungstechnik, werden immer kleiner. Der übrig bleibende Platz für einen Beschriftungsstreifen für die Eingangs- und/oder Ausgangsklemmen reicht gerademal für ein bis zwei Buchstaben. Einem Inbetriebsetzer oder Anlagenbetreiber möchte man aber möglichst eine sinnvolle Information über die Beschaltung der Eingangs- und/oder Ausgangsklemmen der Peripheriebaugruppe geben. Beispiel: K1: = "Ventil Abgasrückführung 23 von Block 7".

Es gibt schon Lösungen, bei welchen ein Inbetriebsetzer oder Anlagenbetreiber sich mit einem SMART-Phone an die Baugruppe annähert und über eine NFC-Kommunikation dem SMART-Phone die Klemmenbezeichner in Klarschrift übermittelt werden. Dies hat allerdings den Nachteil, dass bei einer hohen Packungsdichte von Peripheriebaugruppen, das SMART-Phone die Baugruppe nicht zweifelsfrei detektieren kann. In der Offenlegungsschrift WO 2006/056532 ist eine derartige Lösung offenbart.

Es ist Aufgabe der vorliegenden Erfindung eine Peripheriebaugruppe bzw. eine Anordnung zum Auslesen von Konfigurationsdaten einer Peripheriebaugruppe bereitzustellen, bei welcher eine eindeutige Identifikation der Baugruppe ermöglicht ist.

Die Aufgabe wird für eine Peripheriebaugruppe für die industrielle Prozessautomatisierung mit Eingangs- und/oder Ausgangsklemmen zum Anschluss von elektrischen Leitungen zu Sensoren und/oder Aktoren eines zu automatisierenden industriellen Prozesses, aufweisend ein Gehäuse zur Aufnahme einer Steuereinheit, von Eingangs- und/oder Ausgangsschaltungen, welche zum einen mit den Eingangs- und/oder Ausgangsklemmen und zum anderen mit der Steuereinheit verbunden sind, von einem Speicherbaustein, in welchem Konfigurationsdaten der Beschaltung der Eingangs- und/oder Ausgangsklemmen hinterlegt sind, dadurch gelöst, dass eine Ausleseeinheit vorhanden ist, welche mit dem Speicherbaustein verbunden ist, eine Sendeeinheit, welche mit der Ausleseeinheit verbunden ist und einer Berührfläche, welche mit der Sendeeinheit verbunden ist, wobei die Berührfläche von außen zugänglich an dem Gehäuse angeordnet ist und die Ausleseeinheit ausgestaltet ist, die Konfigurationsdaten aus dem Speicherbaustein auszulesen und für die Sendeeinheit als ein zu versendendes Datenpaket aufzubereiten, wobei die Berührfläche weiterhin dazu ausgestaltet ist, eine Berührung mit dem Finger einer menschlichen Hand zu erkennen und daraufhin die Sendeeinheit veranlasst wird, das Datenpaket über die Berührfläche auszugeben.

Vorteilhafterweise ist die Peripheriebaugruppe nun mit einer Berührfläche, beispielsweise einem Sensorpunkt, ausgerüstet. Wird die Berührfläche mit dem Finger einer menschlichen Hand berührt, kann sie zusätzlich ein visuelles oder taktiles Feedback geben und gleichzeitig wird ein Senden von Konfigurationsdaten vorbereitet. Ein Inbetriebsetzer einer Anlage der Prozessautomatisierung kann nun direkt mit einem Finger seiner Hand auf die Baugruppe zeigen und sie berühren und hat dadurch eine eindeutige Zuordnung, dass die gesendeten Konfigurationsdaten der Peripheriebaugruppe auch zu dieser berührten Peripheriebaugruppe gehören. Die Sendeeinheit generiert vorteilhafterweise ein Datensignal mit minimalen Strömen und speist es über die Berührfläche in den Finger der menschlichen Hand ein. Über den Körper des Menschen wird das Signal zu einem mobilen Endgerät überragen. Das mobile Endgerät hat eine Gegenberührfläche und eine Empfangseinrichtung, welche das Signal aufnimmt und beispielsweise auf einem Display von einem SMART-Phone oder in einer Daten-Brille können die Klemmenbezeichnungen ausgelesen werden.

Mit Vorteil weisen die Konfigurationsdaten zumindest als Daten eine Klemmennummer und eine zugehörige Klemmenbeschriftung in Klartext auf.

In einer Ausgestaltungsvariante ist die Sendeeinheit der Peripheriebaugruppe ausgestaltet, eine Spannung an die Berührfläche anzulegen, welche einen Stromfluss durch den menschlichen Körper zur Folge hat, wobei die Sendeeinheit weiterhin dazu ausgestaltet ist, auf die angelegte Spannung eine Signalfolge aufzumodulieren, welche das Datenpaket repräsentiert.

Im Hinblick auf eine Befestigung in einem industriellen Prozess oder in einem Schaltschrank sind die Peripheriebaugruppen vorteilhafterweise derart ausgestaltet, dass das Gehäuse eine Rückseite, ausgestaltet zum Befestigen an einer Montageschiene, und eine Vorderseite, ausgestaltet mit den Eingangs- und/oder Ausgangsklemmen, aufweist, wobei eine erste Seitenfläche und eine dritte Seitenfläche des Gehäuses ausgestaltet sind, um weitere gleich aufgebaute Peripheriebaugruppen modular zu einer Reihe zusammenzufügen, wobei die Berührfläche innerhalb einer zweiten Seitenfläche angeordnet ist. Die zweite Seitenfläche ist vorteilhafterweise die Oberseite der Peripheriebaugruppe.

Weiterhin ist es von Vorteil, wenn die zweite Seitenfläche zumindest teilweise als ein Lüftungsgitter ausgestaltet ist. Bei einer Wandmontage an einer Montageschiene beispielsweise ist die zweite Seitenfläche nach oben gerichtet und durch das Lüftungsgitter können innerhalb der Peripheriebaugruppe entstehende Wärmeströme abgeführt werden.

Die Berührfläche ist vorteilhafterweise als ein elektrisch leitender Teil innerhalb des Lüftungsgitters integriert.

Für eine verbesserte Wahrnehmung der Berührung ist die Berührfläche als eine Fingermulde ausgestaltet.

Die eingangs genannte Aufgabe wird ebenfalls durch eine Anordnung zum Auslesen von Konfigurationsdaten einer Peripheriebaugruppe nach einem der Ansprüche 1 bis 7 gelöst. Neben der Peripheriebaugruppe weist die Anordnung einen menschlichen Körper als Datenübertragungsstrecke, ein mobiles Endgerät mit einer Anzeigeeinheit, wobei das mobile Endgerät eine Gegenberührfläche und eine mit der Gegenberührfläche verbundene Empfangseinheit aufweist, auf. Die Empfangseinheit ist dazu ausgestaltet, das von der Berührfläche ausgegebene Datenpaket entgegenzunehmen, wobei ein Finger einer Hand des menschlichen Körpers zur Datenübertragung des Datenpakets die Berührfläche berührt und die Gegenberührfläche einen weiteren Teil des menschlichen Körpers berührt.

Mit Vorteil ist das mobile Endgerät ein Mobiltelefon, angeordnet in der anderen Hand des menschlichen Körpers, wobei die Gegenberührfläche die andere Hand berührt. Demnach wird bei der Anordnung eine Datenübertragungsstrecke mit folgenden Komponenten aufgebaut: Die Peripheriebaugruppe, die Berührfläche, ein Finger einer menschlichen Hand, der menschliche Körper, ein weiterer Kontaktpunkt zu dem menschlichen Körper, beispielsweise die andere Hand des menschlichen Körpers, in der ein Mobiltelefon liegt, die Gegenberührfläche des Mobiltelefons und die Anzeigeeinheit.

Eine andere Möglichkeit die Klemmenbeschriftungen visuell darzustellen ist gegeben, wenn das mobile Endgerät als eine Datenbrille ausgestaltet ist, welche angeordnet am Kopf des menschlichen Körpers ist, wobei die Gegenberührfläche den Kopf berührt.

In der Zeichnung werden zwei Ausführungsbeispiele dargestellt. Es zeigt die
- FIG 1: eine Peripheriebaugruppe mit einer Berührfläche, die
- FIG 2: die Peripheriebaugruppe als Blockschaltbild, die
- FIG 3: einen Konfigurationsdatensatz, die
- FIG 4: eine Anordnung zum Auslesen von Konfigurationsdaten einer Peripheriebaugruppe und die
- FIG 5: eine Datenbrille zum Auslesen von Konfigurationsdaten.

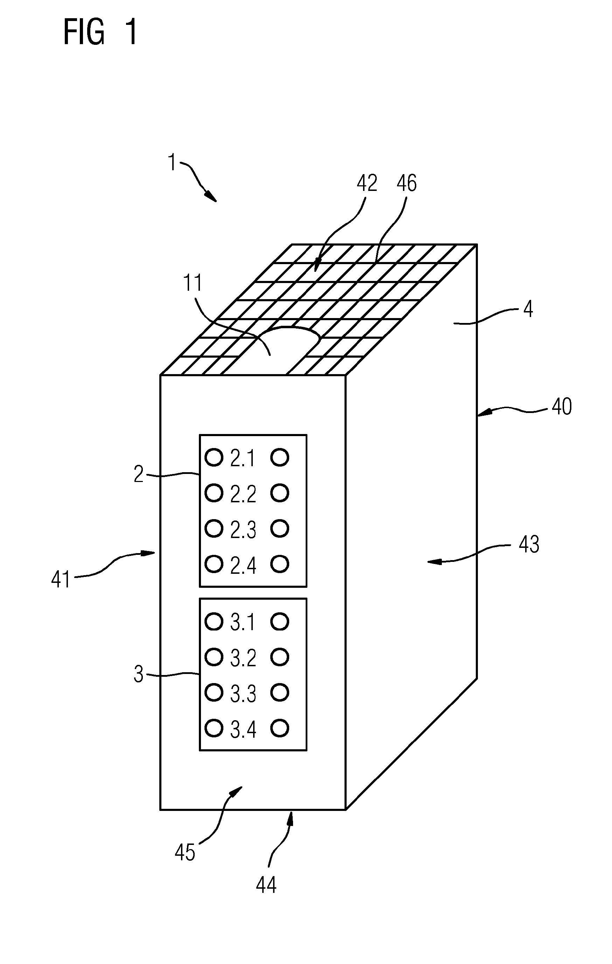

Gemäß FIG 1 ist eine Peripheriebaugruppe 1 für die industrielle Prozessautomatisierung mit Eingangsklemmen 2 und/oder Ausgangsklemmen 3 zum Anschluss von elektrischen Leitungen zu Sensoren und/oder Aktoren eines zu automatisierenden industriellen Prozesses dargestellt. Die Peripheriebaugruppe 1 weist ein Gehäuse 4 zur Aufnahme von Elektronikkomponenten der Peripheriebaugruppe 1 auf.

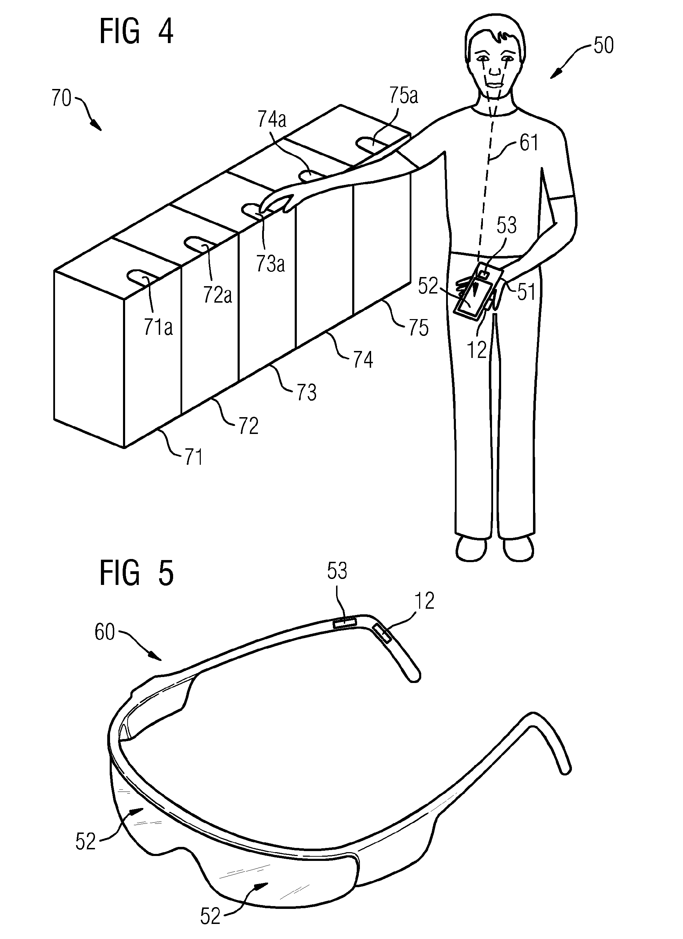

Das Gehäuse 4 ist im Wesentlichen quaderförmig ausgestaltet und weist an einer Rückseite 40 Mittel zum Befestigen an einer Montageschiene und an einer Vorderseite 45 die Eingangsklemmen 2 und/oder Ausgangsklemmen 3 zum Anschluss von elektrischen Leitungen auf. Im Hinblick auf einen modularen Aufbau von mehreren Peripheriebaugruppen weist eine erste Seitenfläche 41 und eine dritte Seitenfläche 43 des Gehäuses 4 Mittel auf, um weitere gleich aufgebaute Peripheriebaugruppen modular zu einer Reihe 70 (siehe FIG 4) zusammenzufügen. Die Berührfläche 11 ist innerhalb der zweiten Seitenfläche 42 angeordnet.

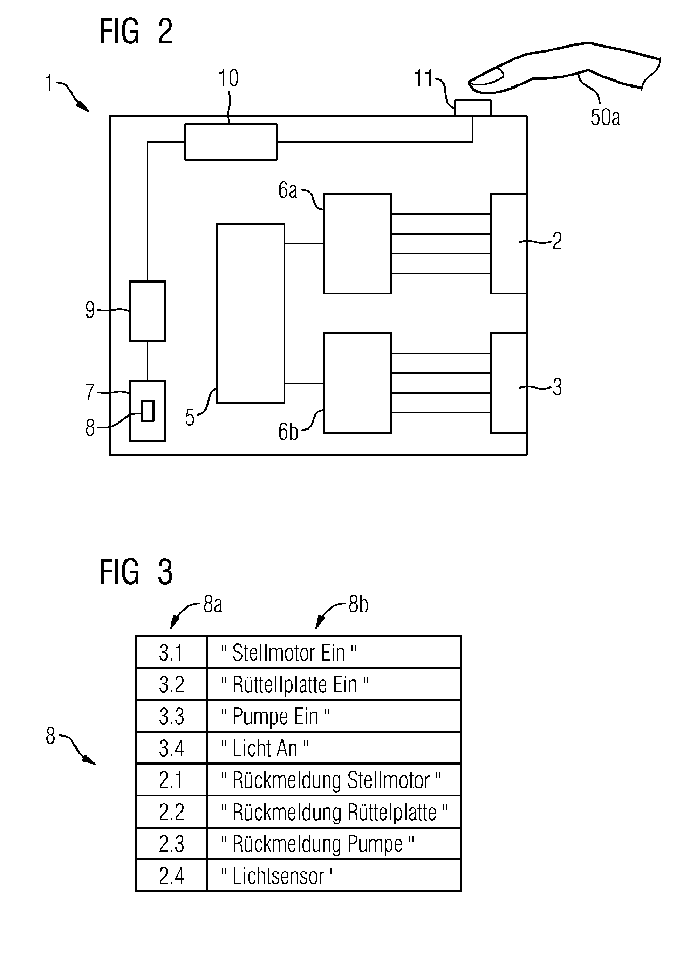

Die FIG 2 verdeutlicht durch ein Blockschaltbild den inneren Aufbau der Peripheriebaugruppe 1. Im Inneren des Gehäuses 4 der Peripheriebaugruppe 1 ist eine Steuereinheit 5, Eingangs- und/oder Ausgangsschaltungen 6a, 6b, welche zum einen mit den Eingangsklemmen 2 und/oder den Ausgangsklemmen 3 und zum anderen mit der Steuereinheit 5 verbunden ist, angeordnet. Weiterhin ist die Peripheriebaugruppe 1 mit einem Speicherbaustein 7, in welchem Konfigurationsdaten 8 der Beschaltung der Eingangsklemmen 2 und/oder Ausgangsklemmen 3 hinterlegt sind, ausgestaltet. Eine Ausleseeinheit 9 ist mit dem Speicherbaustein 7 verbunden. Eine Sendeeinheit 10 ist mit der Ausleseeinheit 9 und mit der Berührfläche 11 verbunden. Die Berührfläche 11 ist von außen zugänglich an dem Gehäuse 4 angeordnet und die Ausleseeinheit 9 ist ausgestaltet, die Konfigurationsdaten 8 aus dem Speicherbaustein 7 auszulesen und für die Sendeeinheit 10 als ein zu versendendes Datenpaket aufzubereiten, wobei die Berührfläche 11 weiterhin dazu ausgestaltet ist, eine Berührung mit einem Finger 50a einer menschlichen Hand zu erkennen und daraufhin die Sendeeinheit 10 veranlasst wird, das Datenpaket über die Berührfläche 11 auszugeben.

FIG 3 zeigt einen Konfigurationsdatensatz der Konfigurationsdaten 8 für Eingangsklemmen 2 und/oder Ausgangsklemmen 3. Die Eingangsklemmen 2 sind unterteilt in eine erste Eingangsklemme 2.1, eine zweite Eingangsklemme 2.2, eine dritte Eingangsklemme 2.3 und eine vierte Eingangsklemme 2.4, wobei der ersten Eingangsklemme 2.1 der Klartext "Rückmeldung Stellmotor", der zweiten Eingangsklemme 2.2 der Klartext "Rückmeldung Rüttelplatte", der dritten Eingangsklemme 2.3 der Klartext "Rückmeldung Pumpe" und der vierte Eingangsklemme 2.4 der Klartext "Lichtsensor" zugeordnet ist.

Den entsprechenden Ausgangsklemmen 3 sind mit der Unterteilung in eine erste Ausgangsklemme 3.1, eine zweite Ausgangsklemme 3.2, eine dritte Ausgangsklemme 3.3 und eine vierte Ausgangsklemme 3.4 mit den entsprechenden Klartextzuordnungen "Stellmotor ein", "Rüttelplatte ein", "Pumpe ein" und "Licht an" den Klemmennummern die zugehörigen Klemmenbeschriftungen zugeordnet.

Gemäß FIG 4 ist eine Anordnung zum Auslesen von Konfigurationsdaten mehrerer Peripheriebaugruppen dargestellt. Aus einer ersten Peripheriebaugruppe 71, einer zweiten Peripheriebaugruppe 72, einer dritten Peripheriebaugruppe 73, einer vierten Peripheriebaugruppe 74 und einer fünften Peripheriebaugruppe 75 ist durch eine Hintereinanderanordnung der Peripheriebaugruppen 71 bis 75 eine modular aufgebaute Reihe 70 von Peripheriebaugruppen gezeigt. Da die einzelnen Peripheriebaugruppen 71 bis 75 in ihren Ausmaßen bereits so klein sind, dass ein Beschriftungsfeld für Eingangsklemmen 2 und/oder Ausgangsklemmen 3 keinen Platz mehr auf den einzelnen Peripheriebaugruppen findet, ist mit Vorteil jede Peripheriebaugruppe 71 bis 75 mit einer zugehörigen ersten Berührfläche 71a, einer zweiten Berührfläche 72a, einer dritten Berührfläche 73a, einer vierten Berührfläche 74a und einer fünften Berührfläche 75a ausgestaltet.

Ein Inbetriebsetzer oder Anlagenbetreiber in Form eines menschlichen Körpers 50 kann nun mit Vorteil, beispielsweise mit dem Zeigefinger seiner rechten Hand, auf die dritte Peripheriebaugruppe 73 zeigen, dabei berührt er eindeutig die dritte Berührfläche 73a der dritten Peripheriebaugruppe 73. Die jeweilige Sendeeinheit 10 in der dritten Peripheriebaugruppe 73 legt nun eine Spannung an die dritte Berührfläche 73a an, wobei die Sendeeinheit 10 dazu ausgestaltet ist, auf die angelegte Spannung eine Signalfolge aufzumodulieren, welche das Datenpaket repräsentiert, in dem die Konfigurationsdaten 8 mit den zugehörigen Klemmennummern und Klemmenbeschriftungen für die Eingangsklemmen 2 und/oder Ausgangsklemmen 3 enthalten sind.

Es entsteht ein Stromfluss durch den menschlichen Körper 50 von der rechten Hand des menschlichen Körpers 50 zu der linken Hand des menschlichen Körpers 50. In der linken Hand des menschlichen Körpers 50 ist ein mobiles Endgerät 51 mit einer Anzeigeeinheit 52 angeordnet. Das mobile Endgerät 51 weist eine Gegenberührfläche 12 und eine Empfangseinheit 53 auf. Das von der dritten Peripheriebaugruppe 73 über die dritte Berührfläche 73a gesendete Datenpaket wird von der Empfangseinheit 53 des mobilen Endgerätes 51 ausgewertet und in der Anzeigeeinheit 52 dargestellt. Mit Vorteil zeigt nun die Anzeigeeinheit 52 beispielsweise das Bild gemäß FIG 3. Durch einen Blick 61 auf die Anzeigeeinheit 52 wird nun dem Inbetriebsetzer die Belegung der Eingangsklemmen 2 und/oder Ausgangsklemmen 3 für die dritte Peripheriebaugruppe 73 eindeutig angezeigt.

Die FIG 5 zeigt eine Datensichtbrille 60, welche beim Auslesen von Konfigurationsdaten 8 vorzugsweise am Kopf des menschlichen Körpers 50 angeordnet ist. Die Gläser der Datensichtbrille 60 dienen als Anzeigeeinheit 52. Innerhalb eines Bügels der Datensichtbrille 60 sind die Gegenberührfläche 12 und die Empfangseinheit 53 angeordnet. Die Gegenberührfläche 12 ist innerhalb des Bügels der Datensichtbrille 60 derart angeordnet, dass sie z.B. hinter dem Ohr den Kopf des menschlichen Körpers berührt und somit den Übergang des Datensignals in die Datensichthülle 60 ermöglicht.

## Patentansprüche

1. Peripheriebaugruppe (1) für die industrielle Prozessautomatisierung mit Eingangsklemmen (2) und/oder Ausgangsklemmen (3) zum Anschluss von elektrischen Leitungen zu Sensoren und/oder Aktoren eines zu automatisierenden industriellen Prozesses, aufweisend ein Gehäuse (4) zur Aufnahme
- einer Steuereinheit (5),
- von Ein- und/oder Ausgangschaltungen (6a,6b), welche zum einen mit den Eingangsklemmen (2) und/oder Ausgangsklemmen (3) und zum anderen mit der Steuereinheit (5) verbunden sind,
- von einem Speicherbaustein (7), in welchem Konfigurationsdaten (8) der Beschaltung der Eingangsklemmen (2) und/oder Ausgangsklemmen (3) hinterlegt sind,
**gekennzeichnet durch**,
- eine Ausleseeinheit (9), welche mit dem Speicherbaustein (7) verbunden ist,
- eine Sendeeinheit (10), welche mit der Ausleseeinheit (9) verbunden ist und
- einer Berührfläche (11), welche mit der Sendeeinheit (10) verbunden ist,
wobei die Berührfläche (11) von außen zugänglich an dem Gehäuse (4) angeordnet ist und die Ausleseeinheit (9) ausgestaltet ist die Konfigurationsdaten (8) aus dem Speicherbaustein (7) aus zu lesen und für die Sendeeinheit (10) als ein zu Versendenes Datenpaket aufzubereiten, wobei die Berührfläche (11) weiterhin dazu ausgestaltet ist eine Berührung mit einem Finger einer menschlichen Hand zu erkennen und daraufhin die Sendeeinheit (10) veranlasst wird das Datenpaket über die Berührfläche (11) aus zu geben.

2. Peripheriebaugruppe (1) nach Anspruch 1, wobei die Konfigurationsdaten (8) zumindest als Daten eine Klemmennummer und eine zugehörige Klemmenbeschriftung in Klartext enthalten.

3. Peripheriebaugruppe (1) nach Anspruch 1 oder 2, wobei die Sendeeinheit (10) ausgestaltet ist eine Spannung an die Berührfläche (11) anzulegen, welche einen Stromfluss durch den menschlichen Körper (50) zur Folge hat, wobei die Sendeeinheit (10) weiterhin dazu ausgestaltet ist auf die angelegte Spannung eine Signalfolge auf zu modulieren, welche das Datenpaket repräsentiert.

4. Peripheriebaugruppe (1) nach einem der Ansprüche 1 bis 3, wobei das Gehäuse (4) eine Rückseite (40) ausgestaltet zum Befestigen an einer Montageschiene und eine Vorderseite (45) ausgestaltet mit den Eingangsklemmen (2) und/oder Ausgangsklemmen (3) aufweist, wobei eine erste Seitenfläche (41) und eine dritte Seitenfläche (43) des Gehäuses (4) ausgestaltet sind um weitere gleich aufgebaute Peripheriebaugruppen modular zu einer Reihe (70) zusammen zu fügen, wobei die Berührfläche (11) innerhalb einer zweiten Seitenfläche (42) angeordnet ist.

5. Peripheriebaugruppe (1) nach Anspruch 4, wobei die zweite Seitenfläche (42) zumindest teilweise als ein Lüftungsgitter (46) ausgestaltet ist.

6. Peripheriebaugruppe (1) nach Anspruch 5, wobei die Berührfläche (11) als ein elektrisch leitender Teil innerhalb des Lüftungsgitters (46) integriert.

7. Peripheriebaugruppe (1) nach einem der Ansprüche 1 bis 6, wobei die Berührfläche (11) als eine Fingermulde ausgestaltet ist.

8. Anordnung zum Auslesen von Konfigurationsdaten einer Peripheriebaugruppe (1) nach einem der Ansprüche 1 bis 7 umfassend,
die Peripheriebaugruppe (1),
einen menschlichen Körper (50) als Datenübertragungsstrecke, ein mobiles Endgerät (51) mit einer Anzeigeeinheit (52), wobei das mobile Endgerät (51) eine Gegenberührfläche (12) und eine mit der Gegenberührfläche (12) verbundene Empfangseinheit (53) aufweist, die Empfangseinheit (53) ist dabei dazu ausgestaltet das von der Berührfläche (11) ausgegebene Datenpaket entgegen zu nehmen, wobei ein Finger einer Hand des menschlichen Körpers (50) zur Datenübertragung des Datenpakets die Berührfläche (11) berührt und die Gegenberührfläche (12) einen weiteren Teil des menschlichen Körpers (50) berührt.

9. Anordnung nach Anspruch 8, wobei das mobile Endgerät (51) ein Mobiltelefon ist, angeordnet in der anderen Hand des menschlichen Körpers (50), wobei die Gegenberührfläche (12) die andere Hand berührt.

10. Anordnung nach Anspruch 8, wobei das mobile Endgerät (51) ein Datensichtbrille (60) ist, angeordnet am Kopf des menschlichen Körpers (50), wobei die Gegenberührfläche (12) den Kopf berührt.
